# EUROPÄISCHE PATENTANMELDUNG

(11) **EP 4 485 756 A1**
(43) Veröffentlichungstag der Anmeldung: **01.01.2025**
(21) Anmeldenummer: 23181715.6
(22) Anmeldetag: 27.06.2023
(51) Int. Cl.: H02K 1/2795, H02K 21/24

(54) **PERMANENTMAGNETANORDNUNG FÜR EINE AXIALFLUSSMASCHINE EINES TÜRANTRIEBS UND AXIALFLUSSMASCHINE**

(71) Anmelder: dormakaba Deutschland GmbH, 58256 Ennepetal (DE)
(72) Erfinder: Mertens, Tim, 42113 Wuppertal (DE); vom Brocke, Jan Eric, 58256 Ennepetal (DE); Busch, Sven, 44227 Dortmund (DE)
(74) Vertreter: Balder IP Law, S.L.

(57) **Zusammenfassung**

Die Erfindung betrifft eine Permanentmagnetanordnung (1) zur Verwendung als Rotor oder Stator einer Axialflussmaschine, insbesondere einer Axialflussmaschine eines Türantriebs. Die Permanentmagnetanordnung (1) weist mehrere um eine Maschinenachse (2) ringförmig angeordnete und jeweils in einer parallel zu der Mittelachse (2) verlaufenden axialen Richtung magnetisierte Permanentmagnete (3) auf. Benachbart zueinander angeordnete Permanentmagnete (3) weisen jeweils eine entgegengesetzt ausgerichtete Polarisierung auf. Jeder Permanentmagnet (3) erstreckt sich von einer der Maschinenachse (2) zugewandten Innenfläche (6) des Permanentmagneten (3) zu einer Außenfläche (7) des Permanentmagneten (3) weg. Jeder Permanentmagnet (3) weist eine erste Seitenfläche (9) und eine der ersten Seitenfläche (9) gegenüberliegende zweite Seitenfläche (10) auf. Die beiden Seitenflächen (9, 10) verbinden die Innenfläche (6) und die Außenfläche (7) miteinander. Die erste Seitenfläche (9) jedes Permanentmagneten (3) sind in Richtung auf die zweite Seitenfläche (10) eines jeweils unmittelbar benachbarten Permanentmagneten (3) ausgerichtet. Jede erste Seitenfläche (9) weist einen stetig gekrümmten Verlauf von der Innenfläche (6) bis zu der Außenfläche (7) hin auf, sodass der Verlauf der ersten Seitenfläche (9) entweder konkav oder konvex ist.

## Beschreibung

Die Erfindung betrifft eine Permanentmagnetanordnung zur Verwendung als Rotor oder Stator einer Axialflussmaschine, insbesondere einer Axialflussmaschine eines Türantriebs, wobei die Permanentmagnetanordnung mehrere um eine Maschinenachse ringförmig angeordnete und jeweils in einer parallel zu der Maschinenachse verlaufenden axialen Richtung magnetisierte Permanentmagnete aufweist, wobei benachbart zueinander angeordnete Permanentmagnete jeweils eine entgegengesetzt ausgerichtete Polarisierung aufweisen, wobei sich jeder Permanentmagnet von einer der Maschinenachse zugewandten Innenfläche des Permanentmagneten zu einer Außenfläche des Permanentmagneten weg erstreckt, wobei jeder Permanentmagnet eine erste Seitenfläche und eine der ersten Seitenfläche gegenüberliegende zweite Seitenfläche aufweist, wobei die beiden Seitenflächen die Innenfläche und die Außenfläche miteinander verbinden, wobei die erste Seitenfläche jedes Permanentmagneten in Richtung auf die zweite Seitenfläche eines jeweils unmittelbar benachbarten Permanentmagneten ausgerichtet sind. Die Erfindung betrifft auch eine Axialflussmaschine mit einer Spulenanordnung und einer Permanentmagnetanordnung.

Die Verwendung von Axialflussmaschinen und insbesondere von bürstenlosen Axialflussmaschinen für Türantriebe ist aus dem Stand der Technik bekannt und wird beispielsweise in der Druckschrift EP 3 974 610 A1 beschrieben. Bei derartigen Axialflussmaschinen verläuft der magnetische Fluss durch die Permanentmagnetanordnung und die Spulenanordnung axial zur Drehachse des Motors, die die Maschinenachse bildet. Die Permanentmagnetanordnung bildet einen Teil eines Stators der Axialflussmaschine und die Spulenanordnung bildet einen Teil eines Rotors der Axialflussmaschine oder die Permanentmagnetanordnung bildet einen Teil des Rotors der Axialflussmaschine und die Spulenanordnung bildet einen Teil des Stators der Axialflussmaschine. Die Permanentmagneten der Permanentmagnetanordnung und Spulen der Spulenanordnung sind dabei üblicherweise ringförmig um die Maschinenachse herum angeordnet. Die Permanentmagneten sind so ausgerichtet, dass einer der Pole jedes Permanentmagneten näher zu der Spulenanordnung liegt als der andere Pol, sodass innerhalb des jeweiligen Permanentmagneten zwischen dem Nordpol und dem Südpol verlaufende magnetische Feldlinien parallel zu der Maschinenachse verlaufen. Die Permanentmagneten weisen üblicherweise eine näherungsweise trapezförmige Grundfläche auf, wobei Abmessungen der Grundfläche ein Vielfaches einer Höhe des jeweiligen Permanentmagneten aufweisen. Geraden durch Seitenkanten der Grundfläche verlaufen dabei üblicherweise durch einen Punkt der Drehachse bzw. der Maschinenachse, sodass eine Innenkante der Grundfläche kürzer ist als eine Außenkante der Grundfläche. Die Permanentmagnete weisen dadurch eine Form eines näherungsweise trapezförmigen Prismas auf. Häufig sind die Innenkante und die Außenkante auch kreisabschnittsförmig ausgebildet, sodass die Grundfläche ein Ringsegment bildet.

Die Permanentmagnete der erfindungsgemäßen Permanentmagnetanordnung weisen jeweils eine Innenfläche, eine Außenfläche und einander gegenüberliegende Seitenflächen auf. Dabei können diese erkennbar voneinander abgegrenzt werden.

Es ist bekannt, dass beim Betrieb dieser Axialflussmaschinen sogenannte Rastkräfte oder Rastmomente auftreten, die im Betrieb zu einer erhöhten Geräuschentwicklung und Vibration führen und den Gesamtwirkungsgrad der Maschine senken. Die Rastkräfte sind magnetische Störkräfte und entstehen durch Wechselwirkungen zwischen den Permanentmagneten und Spulenkernen bzw. Statorzähnen, die aus Eisen oder einem anderen Material mit guter magnetischer Leitfähigkeit bestehen. Um diese Rastkräfte zu reduzieren sind aus dem Stand der Technik unterschiedliche Maßnahmen bekannt.

Eine dieser Maßnahmen ist die sogenannte "Schrägung der Magnetkanten" der Permanentmagnete. Bei dieser Maßnahme werden die Permanentmagnete ausgehend von der näherungsweise trapezförmigen Grundfläche so angepasst, dass die Geraden durch die Seitenkanten nicht mehr durch die Drehachse verlaufen oder dass von der Trapezform abweichende Formgebungen mit beispielsweise geknickt verlaufenden Seitenkanten gewählt werden. Eine aus dem Stand der Technik bekannte Möglichkeit zur Schrägung der Magnetkanten besteht darin, die Permanentmagneten ausgehend von der trapezförmigen Grundfläche so anzupassen, dass die Seitenkanten um einen sogenannten Schrägungswinkel gegen die durch die Drehachse verlaufenden Geraden verkippt werden. Die Seitenkanten der Permanentmagneten weisen dabei für jeden Verbindungspunkt auf der jeweiligen Seitenkante oder zumindest für jeden Verbindungspunkt auf Abschnitten der Seitenkanten bei geknicktem Verlauf der Seitenkante den gleichen Verschiebungswinkel auf. Dieser wird auch Schrägungswinkel genannt.

Als Aufgabe der Erfindung wird es angesehen, die aus dem Stand der Technik bekannten Ausgestaltungen der Magnetkanten so weiterzuentwickeln, dass die Rastmomente weiter reduziert werden.

Diese Aufgabe wird erfindungsgemäß dadurch gelöst, dass jede erste Seitenfläche einen stetig gekrümmten Verlauf von der Innenfläche bis zu der Außenfläche hin aufweist, sodass der Verlauf der ersten Seitenfläche entweder konkav oder konvex ist. Bei Untersuchungen mit herkömmlichen Permanentmagneten mit näherungsweise trapezförmiger Grundfläche mit kreisabschnittsförmig ausgebildeter Innen- und Außenkante hat sich herausgestellt, dass ein Beitrag einzelner Abschnitte der Permanentmagneten zu den durch diese Permanentmagneten erzeugten Rastmomente abhängig vom Abstand des jeweiligen Abschnitts von der Maschinenachse ist. Zudem hat sich herausgestellt, dass dieser Beitrag nicht linear von dem Abstand abhängt. Durch die erfindungsgemäße Ausgestaltung mindestens einer der beiden Seitenflächen wird diese Erkenntnis ausgenutzt, um die Rastmomente weiter zu verringern. Dazu wird anstelle der Ausgestaltung mit einem konstanten Verschiebungs- bzw. Schrägungswinkel mindestens eine der Seitenflächen so ausgestaltet, dass der Schrägungswinkel mit dem Abstand von der Maschinenachse kontinuierlich zunimmt und gekrümmt ausgebildet ist.

Die Rastmomente können vorteilhafterweise dadurch weiter reduziert werden, dass eine Krümmung der ersten Seitenfläche von der Innenfläche zu der Außenfläche hin zunimmt. Es hat sich gezeigt, dass durch eine derartige Ausgestaltung einer Seitenfläche mit einem in Abhängigkeit des Abstands von der Maschinenachse überproportional größer werdenden Schrägungswinkel die Rastmomente besonders gut reduziert werden können.

Vorteilhafterweise ist erfindungsgemäß vorgesehen, dass jede zweite Seitenfläche einen stetig gekrümmten Verlauf von der Innenfläche bis zu der Außenfläche hin aufweist, sodass der Verlauf der zweiten Seitenfläche entweder konvex oder konkav ist. Auf diese Weise ist die zweite Seitenfläche ebenfalls geneigt bzw. verkippt oder geschrägt und gekrümmt ausgestaltet.

Bei einer besonders vorteilhaften Ausgestaltung der erfindungsgemäßen Permanentmagnetanordnung ist vorgesehen, dass eine Krümmung der zweiten Seitenfläche von der Innenfläche zu der Außenfläche hin zunimmt. Auf diese Weise verändert sich der Schrägungswinkel der zweiten Seitenfläche wie bei der ersten Seitenfläche überproportional im Verhältnis zum Abstand des jeweiligen Abschnitts von der Maschinenachse.

Vorteilhafterweise ist erfindungsgemäß vorgesehen, dass der Verlauf der zweiten Seitenfläche konkav ist, wenn der Verlauf der ersten Seitenfläche konvex ist und umgekehrt. Auf diese Weise ist die zweite Seitenfläche in die gleiche Richtung geneigt bzw. verkippt oder geschrägt wie die erste Seitenfläche.

Die Rastmomente können dadurch weiter reduziert werden, dass ein in einer Umfangsrichtung der Permanentmagnetanordnung bestimmter Abstand der ersten Seitenfläche zu der zweiten Seitenfläche jedes Permanentmagneten zueinander von der Innenfläche zu der Außenfläche hin zunimmt. Der erste Verschiebungswinkel nimmt im Verhältnis zu dem Abstand des jeweiligen Verschiebungspunkts zu der Maschinenachse bei dieser Ausgestaltung also stärker zu, als der zweite Verschiebungswinkel abnimmt.

Vorteilhafterweise ist erfindungsgemäß vorgesehen, dass sämtliche senkrecht auf der Maschinenachse stehende Schnittebenen jedes Permanentmagneten deckungsgleich sind. Hierdurch weisen sämtliche erste Verbindungslinien gleicher Länge den gleichen ersten Verschiebungswinkel und sämtliche zweite Verbindungslinien gleicher Länge den gleichen zweiten Verschiebungswinkel auf. Dadurch ergibt sich ein ausschließlich in einer Umfangsrichtung gekrümmter oder gestufter Verlauf beider Seitenflächen.

Bei einer besonders vorteilhaften Ausgestaltung der erfindungsgemäßen Permanentmagnetanordnung ist vorgesehen, dass die Innenfläche jedes Permanentmagneten abschnittsweise entlang eines Innenringumfangs der Permanentmagnetanordnung und die Außenfläche jedes Permanentmagneten abschnittsweise entlang eines Außenringumfangs der Permanentmagnetanordnung verläuft. Durch die ringförmige Ausgestaltung der Permanentmagnetanordnung ergibt sich ein für den der Axialflussmaschine besonders geeignetes Magnetfeld.

Bei einer besonders vorteilhaften Ausgestaltung der erfindungsgemäßen Permanentmagnetanordnung ist vorgesehen, dass die Permanentmagnete so ausgestaltet und die Innenflächen und die Außenflächen jedes Permanentmagneten so zueinander ausgerichtet sind, dass in mindestens einer senkrecht auf der Maschinenachse stehenden Schnittebene ein ausgehend von der Maschinenachse radial durch einen Innenabstandsmittelpunkt der Innenfläche jedes Permanentmagneten verlaufender Strahl die Außenfläche bzw. den Außenringumfang des jeweiligen Permanentmagneten beabstandet zu einem Außenabstandsmittelpunkt schneidet, wobei der Innenabstandsmittelpunkt und der Außenabstandsmittelpunkt durch die mittlere Weglänge zwischen Endpunkten der jeweiligen Innenfläche bzw. der jeweiligen Außenfläche bestimmt sind.

Um einen durchgehend progressiv gekrümmten Verlauf der Seitenflächen zu erreichen ist erfindungsgemäß vorgesehen, dass die Außenfläche relativ zu der Innenfläche in der Umfangsrichtung verschoben ist. Diese Verschiebung bezieht sich auf die aus dem Stand der Technik bekannte näherungsweise trapezförmige Grundform der Permanentmagnete.

Vorteilhafterweise ist erfindungsgemäß vorgesehen, dass eine Länge der Außenfläche in der Umfangrichtung größer ist als eine Länge der Innenfläche. Auf diese Weise kann der zur Verfügung stehende Bauraum vollständig ausgenutzt werden.

Die Rastmomente können dadurch weiter reduziert werden, dass die Permanentmagnete so ausgestaltet sind und relativ zueinander ausgerichtet sind, dass in mindestens einer senkrecht auf der Maschinenachse stehenden Schnittebene ein ausgehend von der Maschinenachse radial durch einen in der Umfangsrichtung äußersten Punkt der Außenfläche eines ersten Permanentmagneten laufender Strahl abschnittsweise in der korrespondierenden Schnittebene eines zu dem ersten Permanentmagneten unmittelbar benachbart angeordneten zweiten Permanentmagneten verläuft. Benachbarte Permanentmagnete überlappen sich dadurch von der Maschinenachse aus gesehen abschnittsweise.

Erfindungsgemäß ist vorteilhafterweise vorgesehen, dass die Außenfläche und die Innenfläche des Permanentmagneten nicht kontinuierlich ineinander übergehen. Die Innenfläche und die Außenfläche können vorteilhafterweise gegeneinander und gegenüber den Seitenflächen erkennbar voneinander abgegrenzt werden. Vorteilhafterweise gehen die Seitenflächen nicht kontinuierlich in die Innenfläche und die Außenfläche über.

Die Erfindung betrifft auch eine Axialflussmaschine mit einer Spulenanordnung und einer Permanentmagnetanordnung gemäß einem der voranstehenden Ansprüche, wobei die Spulenanordnung mehrere benachbart zueinander ringförmig um die Maschinenachse angeordnete elektrische Maschinenspulen aufweist, wobei die Spulenanordnung axial verschoben, benachbart zu der Permanentmagnetanordnung angeordnet ist. Vorteilhafterweise handelt s sich bei der Axialflussmaschine um eine bürstenlose Axialflussmaschine. Derartige Axialflussmaschinen eignen sich besonders gut für die Verwendung mit Tür- oder Fensterantrieben.

Vorteilhafterweise ist erfindungsgemäß vorgesehen, dass der Innenringumfang und der Außenringumfang der Permanentmagnetanordnung im Wesentlichen korrespondierenden Ringumfängen der Spulenanordnung entsprechen. Auf diese Weise kann ein besonders kompakter Aufbau der Axialflussmaschine erreicht werden. Erfindungsgemäß ist vorteilhafterweise vorgesehen, dass die Axialflussmaschine in einem Schwenktürflügel- oder Schiebetür- oder Karusselltürantrieb verwendbar ist.

Weitere vorteilhafte Ausgestaltungen der erfindungsgemäßen Permanentmagnetanordnung werden anhand von in der Zeichnung dargestellten Ausführungsbeispielen näher erläutert.

Figur 1 eine schematische Darstellung einer Permanentmagnetanordnung mit Permanentmagneten, die einen kontinuierlichen Verlauf der Seitenflächen aufweisen und

Figur 2 eine schematische Darstellung einer Axialflussmaschine.

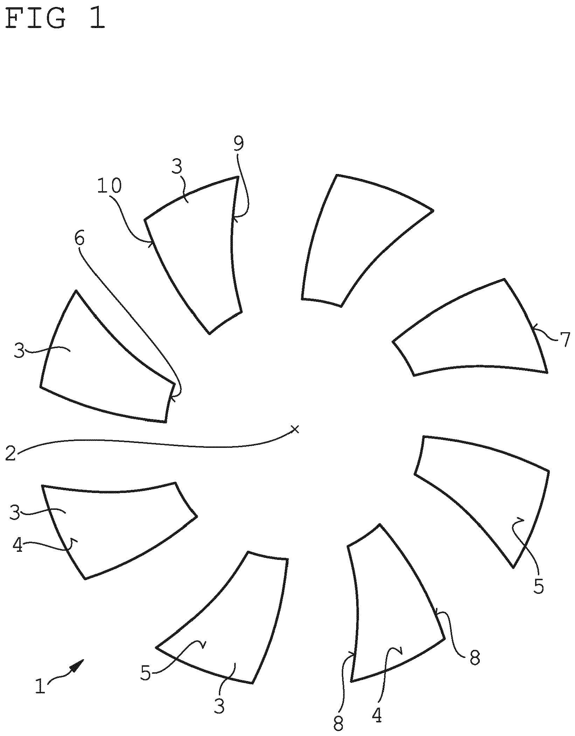

In der Figur 1 ist schematisch eine Permanentmagnetanordnung 1 für eine Axialflussmaschine eines Türantriebs dargestellt. Die Permanentmagnetanordnung 1 weist mehrere benachbart zueinander ringförmig um eine Maschinenachse 2 angeordnete Permanentmagnete 3 auf. Ein magnetischer Nordpol 4 und ein magnetischer Südpol 5 jedes Permanentmagneten 3 ist so angeordnet, dass innerhalb des jeweiligen Permanentmagneten 3 zwischen dem Nordpol 4 und dem Südpol 5 verlaufende magnetische Feldlinien parallel zu der Maschinenachse 2 verlaufen, wobei Magnetfeldrichtungen benachbarter Permanentmagnete 3 entgegengesetzt verlaufen.

Jeder Permanentmagnet 3 erstreckt sich von einer der Maschinenachse 2 zugewandten Innenfläche 6 zu einer Außenfläche 7 weg. Die Innenfläche 6 und die Außenfläche 7 sind durch sich jeweils von dem Nordpol 4 zu dem Südpol 5 erstreckende Seitenflächen 8 des jeweiligen Permanentmagneten 3 verbunden.

Erste Seitenflächen 9 und zweite Seitenflächen 10 weisen einen kontinuierlich in einer Umfangsrichtung der Permanentmagnetanordnung 1 gekrümmten Verlauf von der Innenfläche 6 zu der Außenfläche 7 hin auf, wobei die erste Seitenfläche 9 konkav gekrümmt ist und die zweite Seitenfläche 10 konvex gekrümmt ist. Dabei nimmt ein in der Umfangsrichtung der Permanentmagnetanordnung 1 bestimmter Abstand der Seitenflächen 9, 10 zueinander in der radialen Richtung zu.

Die Innenfläche 6 und die Außenfläche 7 jedes Permanentmagneten 3 sind gekrümmt und verlaufen entlang eines Innenringumfangs und eines Außenringumfangs der Permanentmagnetanordnung 1. Dabei sind die Außenflächen 7 relativ zu den Innenfläche 6 in der Umfangsrichtung verschoben. Zudem ist eine Länge der Außenflächen 7 in der Umfangrichtung größer ist als eine Länge der Innenflächen 6.

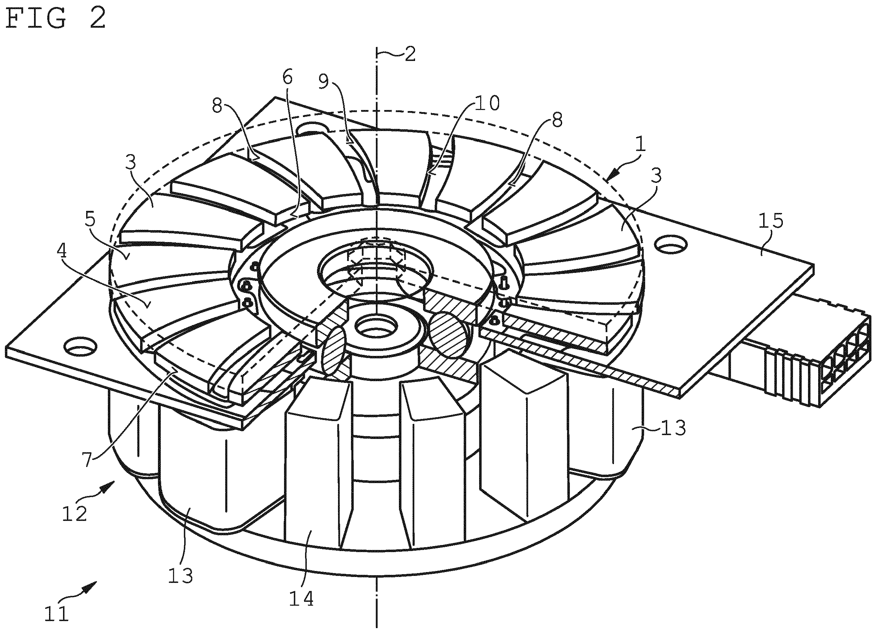

Figur 2 zeigt schematisch eine teilweise geschnitten dargestellte Axialflussmaschine 11 mit einer Spulenanordnung 12 und einer Permanentmagnetanordnung 1. Die Permanentmagnetanordnung 1 entspricht dabei der in Figur 1 dargestellten Ausgestaltung. In dieser Darstellung ist erkennbar, dass sämtliche senkrecht auf der Maschinenachse 2 stehende Schnittebenen jedes Permanentmagneten 3 deckungsgleich sind.

Die Spulenanordnung 12 weist mehrere benachbart zueinander ringförmig um die Maschinenachse 2 angeordnete elektrische Maschinenspulen 13 auf, die um Eisenkerne 14 der Spulenanordnung 12 gewickelt sind. Die Spulenanordnung 12 ist axial verschoben, benachbart zu der Permanentmagnetanordnung 1 angeordnet. Die Axialflussmaschine 11 weist zudem eine Platine 15 zur elektrischen Kontaktierung der Spulen 13 auf.

In der Zeichnung sind jeweils exemplarisch einzelne mehrerer gleichartiger Elemente mit einem Bezugszeichen gekennzeichnet.

## Patentansprüche

1. Permanentmagnetanordnung (1) zur Verwendung als Rotor oder Stator einer Axialflussmaschine (11), insbesondere einer Axialflussmaschine (11) eines Türantriebs, wobei die Permanentmagnetanordnung (1) mehrere um eine Maschinenachse (2) ringförmig angeordnete und jeweils in einer parallel zu der Maschinenachse (2) verlaufenden axialen Richtung magnetisierte Permanentmagnete (3) aufweist, wobei benachbart zueinander angeordnete Permanentmagnete (3) jeweils eine entgegengesetzt ausgerichtete Polarisierung aufweisen, wobei sich jeder Permanentmagnet (3) von einer der Maschinenachse (2) zugewandten Innenfläche (6) des Permanentmagneten (3) zu einer Außenfläche (7) des Permanentmagneten (3) weg erstreckt, wobei jeder Permanentmagnet (3) eine erste Seitenfläche (9) und eine der ersten Seitenfläche (9) gegenüberliegende zweite Seitenfläche (10) aufweist, wobei die beiden Seitenflächen (9, 10) die Innenfläche (6) und die Außenfläche (7) miteinander verbinden, wobei die erste Seitenfläche (9) jedes Permanentmagneten (3) in Richtung auf die zweite Seitenfläche (10) eines jeweils unmittelbar benachbarten Permanentmagneten (3) ausgerichtet sind, **dadurch gekennzeichnet, dass** jede erste Seitenfläche (9) einen stetig gekrümmten Verlauf von der Innenfläche (6) bis zu der Außenfläche (7) hin aufweist, sodass der Verlauf der ersten Seitenfläche (9) entweder konkav oder konvex ist.

2. Permanentmagnetanordnung (1) gemäß Anspruch 1, **dadurch gekennzeichnet, dass** eine Krümmung der ersten Seitenfläche (9) von der Innenfläche (6) zu der Außenfläche (7) hin zunimmt.

3. Permanentmagnetanordnung (1) gemäß Anspruch 1 oder Anspruch 2, **dadurch gekennzeichnet, dass** jede zweite Seitenfläche (10) einen stetig gekrümmten Verlauf von der Innenfläche (6) bis zu der Außenfläche (7) hin aufweist, sodass der Verlauf der zweiten Seitenfläche (10) entweder konvex oder konkav ist.

4. Permanentmagnetanordnung (1) gemäß Anspruch 3, **dadurch gekennzeichnet, dass** eine Krümmung der zweiten Seitenfläche (10) von der Innenfläche (6) zu der Außenfläche (7) hin zunimmt.

5. Permanentmagnetanordnung (1) gemäß Anspruch 3 oder Anspruch 4, **dadurch gekennzeichnet, dass** der Verlauf der zweiten Seitenfläche (10) konkav ist, wenn der Verlauf der ersten Seitenfläche (9) konvex ist und umgekehrt.

6. Permanentmagnetanordnung (1) gemäß einem der voranstehenden Ansprüche, **dadurch gekennzeichnet, dass** ein in einer Umfangsrichtung der Permanentmagnetanordnung (1) bestimmter Abstand der ersten Seitenfläche (9) zu der zweiten Seitenfläche (10) jedes Permanentmagneten (3) zueinander von der Innenfläche (6) zu der Außenfläche (7) hin zunimmt.

7. Permanentmagnetanordnung (1) gemäß einem der voranstehenden Ansprüche, **dadurch gekennzeichnet, dass** sämtliche Schnittflächen jedes Permanentmagneten (3) durch senkrecht auf der Maschinenachse (2) stehende Schnittebenen deckungsgleich sind.

8. Permanentmagnetanordnung (1) gemäß einem der voranstehenden Ansprüche, **dadurch gekennzeichnet, dass** die Innenfläche (6) jedes Permanentmagneten (3) abschnittsweise entlang eines Innenringumfangs der Permanentmagnetanordnung (1) und die Außenfläche (7) jedes Permanentmagneten (3) abschnittsweise entlang eines Außenringumfangs der Permanentmagnetanordnung (1) verläuft.

9. Permanentmagnetanordnung (1) gemäß einem der voranstehenden Ansprüche, **dadurch gekennzeichnet, dass** eine Länge der Außenfläche (7) in der Umfangrichtung größer ist als eine Länge der Innenfläche (6).

10. Permanentmagnetanordnung (1) gemäß einem der voranstehenden Ansprüche, **dadurch gekennzeichnet, dass** die Permanentmagnete (3) so ausgestaltet und die Innenflächen (6) und die Außenflächen (7) jedes Permanentmagneten (3) so zueinander ausgerichtet sind, dass in mindestens einer senkrecht auf der Maschinenachse (2) stehenden Schnittebene ein ausgehend von der Maschinenachse (2) radial durch einen Innenabstandsmittelpunkt der Innenfläche (6) jedes Permanentmagneten (3) verlaufender Strahl die Außenfläche (7) und/oder den Außenringumfang des jeweiligen Permanentmagneten (3) beabstandet zu einem Außenabstandsmittelpunkt schneidet, wobei der Innenabstandsmittelpunkt und der Außenabstandsmittelpunkt durch die mittlere Weglänge zwischen Endpunkten der jeweiligen Innenfläche (6) bzw. der jeweiligen Außenfläche (7) bestimmt sind.

11. Permanentmagnetanordnung (1) gemäß einem der voranstehenden Ansprüche, **dadurch gekennzeichnet, dass** die Permanentmagnete (3) so ausgestaltet sind und relativ zueinander ausgerichtet sind, dass in mindestens einer senkrecht auf der Maschinenachse (2) stehenden Schnittebene ein ausgehend von der Maschinenachse (2) radial durch einen in der Umfangsrichtung äußersten Punkt der Außenfläche (7) eines ersten Permanentmagneten (3) laufender Strahl abschnittsweise in der korrespondierenden Schnittebene eines zu dem ersten Permanentmagneten (3) unmittelbar benachbart angeordneten zweiten Permanentmagneten (3) verläuft.

12. Axialflussmaschine (11) mit einer Spulenanordnung (12) und mit einer Permanentmagnetanordnung (1) gemäß einem der voranstehenden Ansprüche, wobei die Spulenanordnung (12) mehrere benachbart zueinander ringförmig um die Maschinenachse (2) angeordnete elektrische Maschinenspulen (13) aufweist, wobei die Spulenanordnung (12) axial verschoben benachbart zu der Permanentmagnetanordnung (1) angeordnet ist.

13. Axialflussmaschine (11) gemäß Anspruch 12, **dadurch gekennzeichnet, dass** der Innenringumfang und der Außenringumfang der Permanentmagnetanordnung (1) im Wesentlichen korrespondierenden Ringumfängen der Spulenanordnung (12) entsprechen.

14. Axialflussmaschine (11) gemäß Anspruch 12 oder Anspruch 13, **dadurch gekennzeichnet, dass** die Axialflussmaschine (11) in einem Schwenkflügeltür- oder Schiebetür- oder Karusselltürantrieb verwendbar ist.
